# EUROPEAN PATENT SPECIFICATION

(11) **EP 2 621 009 B1**
(45) Date of publication and mention of the grant of the patent: **28.01.2015**
(21) Application number: 12152770.9
(22) Date of filing: 26.01.2012
(51) Int. Cl.: H01M 8/02, H01M 8/12, H01M 4/88

(54) **A porous metal substrate structure for solid oxide fuel cell**
Poröse Metallsubstratstruktur für Festoxidbrennstoffzelle
Structure de substrat métallique poreux pour pile à combustible à oxyde solide

(43) Date of publication of application: 31.07.2013
(73) Proprietor: Institute of Nuclear Energy Research Atomic Energy Council, Longtan Township, Taoyuan County (TW)
(72) Inventor: Hwang, Chang-Sing, Taoyuan County 325 (TW); Tsai, Chun-Huang, Taoyuan County 325 (TW); Yu, Jen-Feng, Taichung City 43545 (TW); Chang, Chun-Liang, Yunlin County 64042 (TW); Lin, Jun-Meng, Taipei City 10458 (TW); Cheng, Shih-Wei, New Taipei City 22162 (TW)
(74) Representative: Lang, Christian

(56) References cited:
- WO-A1-2004/049484
- US-A1- 2010 098 996
- US-A1- 2011 003 235
- US-A1- 2011 287 340

## Description

### TECHNICAL FIELD

The present disclosure relates to a solid oxide fuel cell (SOFC), and more particularly, to a porous metal substrate structure for a SOFC

### TECHNICAL BACKGROUND

Recently the solid oxide fuel cell (SOFC) has been a promising means of converting chemical energy into electrical energy by an electro-chemical mechanism. Usually in the conventional SOFC, the Yttria Stabilized Zirconia (YSZ) is used as the electrolyte, the cermet composed of nickel (Ni) and YSZ is used as the anode, and the perovskite composed of LaMnO₃ is used as the cathode.

When the SOFC works in a high-temperature environment, the anode fuel, H₂, may somehow be suddenly interrupted, such that the air may get into the anode of the fuel cell. Since Ni, the metal catalyst in the fuel, will be oxidized with its volume increased and its expansion coefficient changed, the anode of the SOFC tends to be broken into pieces.

Consequently, there were ways to promote the redox stability of solid oxide fuel cell. La_{0.75}Sr_{0.25}Cr_{0.5}Mn_{0.5}O₃ (LSCM) has been proposed as one option for the anode material of the SOFC to have improved anode redox stability. However, the catalytic conversion efficiency of LSCM is less than that of Ni and also LSCM is not a good conductor for oxygen (O) ions, therefore, the polarization resistance of LSCM anode is not low enough.

Moreover, to increase the anode redox stability of a solid oxide fuel cell, it is disclosed that another nickel oxide (NiO) or oxidation barrier (Journal of The Electrochemical Society, 153(10), A1929, 2006) layer is coated on the metal substrate. The NiO particle in this layer has a size less than the NiO particles in the anode, and is to be reduced to a porous Ni layer when the full cell is in normal working conditions. The porous Ni layer tends to be re-oxidized more easily, so as to absorb abnormal oxygen leak to improve redox stability of the anode of a solid oxide fuel cell. However, the permeability of fuel gas decreases accordingly.

In the method mentioned above, the thickness of Ni active layer for improving redox stability of solid oxide fuel cell is smaller than the thickness of the support for solid oxide fuel cell. If the microstructure of the support for solid oxide fuel cell can be modified so that fuel gas (for example, hydrogen) can still pass through the support easily, but the oxygen from leakage can be more effectively absorbed in the longer gas channels of the metal support, then the redox stability improvement will be significantly improved.

US 2011/0287340 A1 relates to a solid oxide fuel cell provided with a bi-layer porous metal support made of a material such as nickel-based alloys. A lower layer thereof has a high porosity, while an upper layer thereof has a lower porosity. However, the bi-layer porous metal plate may not improve the redox stability of the solid oxide fuel cell.

### TECHNICAL SUMMARY

It is one object of the present invention to provide a porous metal supporting substrate structure with improved gas permeability by acid etching method.

It is another object of the present invention to provide a porous metal supporting substrate structure with improved anode redox stability for supporting a SOFC.

It is another object of the present invention to provide a porous metal supporting substrate with a surface region that is more porous than the inside of porous metal supporting substrate, hence the stress due to the thermal expansion mismatch between porous metal supporting substrate and the functional layers coated on the porous metal supporting substrate can be reduced to a satisfied level.

It is another object of the present invention to provide a combination of porous metal supporting substrate and a redox stable functional layer coated on the porous metal supporting substrate. This combination provides enhanced stability of anode redox for the SOFC application.

The above mentioned objects are solved by the porous metal substrate structure according to claim 1 and the method for fabrication the same according to claim 10. Advantageous improvements of the invention are described by the dependent claims.

### BRIEF DESCRIPTION OF THE DRAWINGS

The present disclosure will become more fully understood from the detailed description given herein below and the accompanying drawings which are given by way of illustration only, and thus are not limitative of the present disclosure and wherein:
FIG. 1 is a schematic diagram showing the architecture of a porous metal substrate structure for supporting the functional layers of a SOFC according to an embodiment of the present invention.
FIG. 2A is a flowchart of a fabricating method of the porous metal substrate structure for supporting the functional layers of a SOFC according to another embodiment of the present invention.
FIG. 2B is a schematic diagram for comparison between the porous Ni plate and the porous metal substrate for supporting SOFC function layers.
FIG. 2C is the schematic diagram to show a modified porous Ni plate with a more porous surface region before impregnating iron (Fe).
FIG.3 is a schematic diagram showing a combination of the porous metal supporting substrate and a redox stable functional layer coated on the porous metal supporting substrate according to an exemplary embodiment.

### DESCRIPTION OF THE EXEMPLARY EMBODIMENTS

For further understanding and recognizing the fulfilled functions and structural characteristics of the disclosure, several exemplary embodiments cooperating with detailed description are presented as the following.

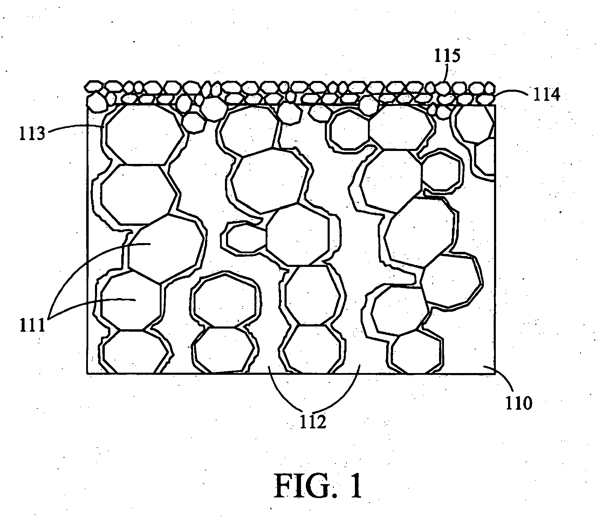

Please refer to FIG. 1, which is a schematic diagram showing the architecture of a porous metal substrate structure for supporting the functional layer of a SOFC according to an embodiment of the present disclosure. The porous metal substrate 100 is composed of a porous metal plate 110 and a porous metal film 114, wherein the porous metal plate 110 comprises first metal particles 111, gas channels 112, and a porous shell 113. The first metal particles 111 are composed of a first Ni-Fe mixture. The gas channels 112 are the gaps between the first metal particles 111, whereby gas is able to permeate though the porous metal substrate 100. The porous shell 113 is formed on the surface of each of the first metal particles 111. The porous shell 113 contains a third Ni-Fe mixture, in which the Fe content of the third Ni-Fe mixture is richer than the Fe content of the first Ni-Fe mixture. The porous metal film 114 formed of second metal particles 115 is on the porous metal plate 110, wherein the second metal particles 115 are composed of Ni or a second Ni-Fe mixture, and the second metal particles 115 are smaller than the first metal particles 111. The porous shells 113 are capable of absorbing oxygen to have the improved redox stability of SOFC anode. The iron-nickel alloy inside the first metal particles 111 may be capable of improving the mechanic strength of the porous metal plate 110. Wherein, the porous metal plate 110 has a thickness more than the porous metal film 114, and the first metal particle 111 has a size more than the second metal particle 115.

In the other words, the porous metal supporting substrate 100 has the thick porous metal plate 110 and the thin porous metal film 114 on the porous metal plate 110. The metal particles of the porous metal plate 110 have porous shells 113 on their surfaces. These porous shells 113 containing iron (Fe) and nickel (Ni) particles are capable of absorbing oxygen by the oxidation of iron and nickel particles at fuel cell operation temperatures when there is a loss of hydrogen fuel and a leakage of oxygen into the anode of a solid oxide fuel cell. In addition, the metal particles of the porous metal plate 110 contain a mixture of Ni and Fe, so that the mechanic strength of the porous support substrate can be increased.

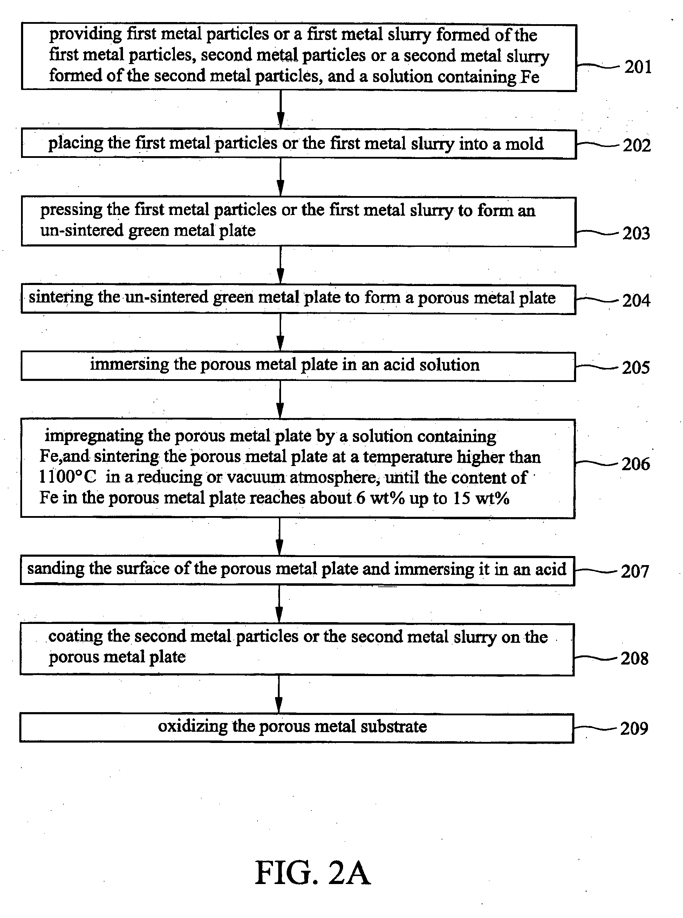

Referring to FIG. 2A, a flowchart of a fabricating method of the porous metal substrate for supporting the functional layers of a SOFC is schematically shown according to another embodiment of the present disclosure. In Step 201, first metal particles or a first metal slurry formed of the first metal particles, second metal particles or a second metal slurry formed of the second metal particles, and a solution containing Fe are provided, wherein the first metal particle has a size more than the second metal particle; for example, the first metal particle may have a diameter of about 60µm to 250µm. The material of the first metal particles can be nickel, for example. The second metal particle has a diameter of about 20µm to 60µm, and the material of the second metal particles can be nickel too. The first and second metal slurries are composed of organic binder, solvent and metal particles, wherein the organic binder can be polyvinyl alcohol or ethyl cellulose and the solvent can be water or α-terpineol. In the embodiment, the first metal particles are larger than the second metal particles. Furthermore, the second metal particles can also be composed of nickel, a Ni-Fe mixture, or a Ni-Co-Fe-Cu mixture. For improving its catalytic performance at high temperature, other metal particles like Pd and Ru can be added therein. The solution containing iron (Fe) is a mixture of alcohol, iron nitrate (Fe(NO₃)₃) and fine iron oxide (Fe₂O₃ or Fe₃O₄, for example) particles with size less than 5µm, or preferably, in a nano-scale size.

In Step 202, the first metal particles or the first metal slurry is placed into a mold. In the embodiment, the mold is made of graphite and has a depth of from 1.0mm to 1.5mm, a length of from 103mm to 108mm, and a width of from 103mm to 108mm, but is not limited thereby, which can be made of another high-temperature-resistant material. Before the first metal particles or the first metal slurry is placed into the mold, a layer of fine carbon black is coated on the inside surface of the mold to facilitate afterward mold release. In Step 203, the first metal particles or the first metal slurry being dried in the mold is pressed with a pressure less than 150MPa to form an un-sintered green metal plate. In Step 204, the un-sintered green metal plate is vacuum sintered or is sintered in reducing atmosphere or is vacuum hot-press sintered at a temperature larger than 1100°C for 2 to 6 hours to form a porous metal plate. In the case of using the first metal slurry, the un-sintered green plate obtained from the first metal slurry can also be sintered directly without placing into a mold.

The step 204 is to make a porous nickel metal plate that can be impregnated by the solution containing iron (Fe) in next steps, if the first metal particles are nickel particles. The formed porous nickel metal plate has a thickness in the range from 1mm to 1.25mm and an area in the range from 101 x 101 cm² to 103 x 103 cm²

In Step 205, the porous metal plate after Step 204 is immersed in an acid solution to increase gas-permeability of the porous nickel metal plate to more than 3 Darcy. In this embodiment, 5% nitric acid (HNO₃) is used to erode the Ni plate, but is not limited thereby. To enhance the erosion rate, the acid solution can be heated to a temperature higher than the room temperature or the acid solution can be placed in an ultrasonic bath. In Step 206, the porous metal plate after Step 205 is vacuum impregnated by a solution containing iron (Fe). Then the impregnated porous nickel metal plate is sintered at a temperature higher than 1100°C in a reducing or vacuum atmosphere. This step is repeated until the content of Fe in the porous metal plate reaches about 6 wt% up to 15 wt%.

In Step 207, the surface of the Fe impregnated porous nickel metal plate is sanded, and is immersed in an acid, for example, in 5% HNO₃. In Step 208, the second metal particles or the second metal slurry is coated on the porous metal plate after Step 207, and then sintered in a reducing or vacuum atmosphere at a temperature of higher than 1100°C to form a porous nickel metal film on the porous nickel metal plate, if the first and the second metal particles are nickel. The porous nickel metal substrate composed of an iron impregnated porous nickel plate and a porous nickel metal film is then immersed in 5% HNO₃ solution to clean the surface and enhance the permeability of the porous metal substrate. The porous metal film has a thickness less than 100 µm and has surface pores less than 50µm before oxidation. The second metal particles or the second metal slurry used to form the porous metal film can be Ni particles or N-Fe mixture particles with Fe content in the range from 6 to 50 wt%. In the Step 208, the other metal particles composed of Cu, Co, Pd or Ru, or their mixtures thereof can be further added into to form the porous metal film with a better performance of converting hydrocarbon fuel into hydrogen. The coating methods in the Step 208 include powder covering and slurry pasting methods. In Step 209, the porous nickel metal substrate is oxidized at a temperature less than 800°C in the standard atmosphere for one hour to shrink the surface pores of the porous metal film to less than 35µm.

After Step 209, to form a porous shell containing Fe on the surfaces of the metal particles in the prepared porous metal substrate, the oxidized porous metal substrate is treated in a reduction atmosphere at a temperature higher than 700°C. The porous shell contains Ni and Fe elements, but Fe elements are rich in the porous shell. After finishing all steps including the reduction process, the porous metal substrate has a gas-permeability of 1.974 x 10⁻¹² m² to 4.935 x 10⁻¹² m² (2 to 5 Darcy).

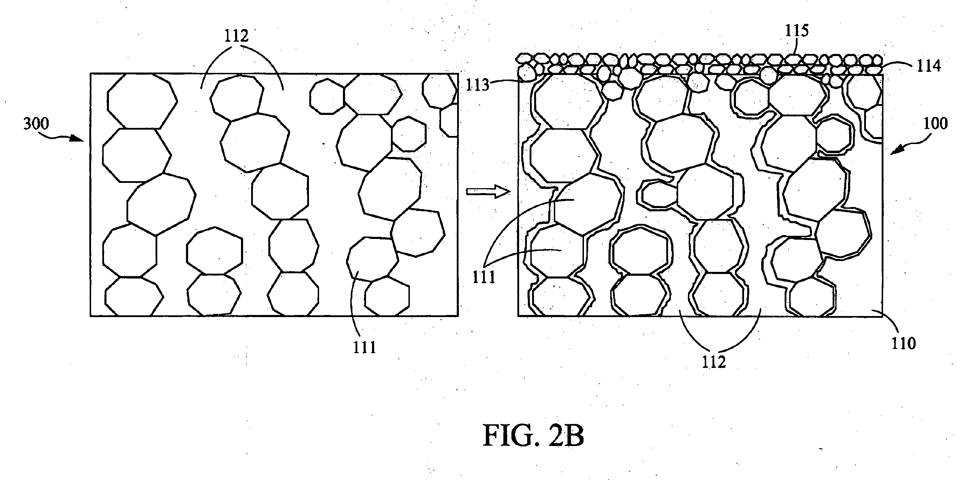

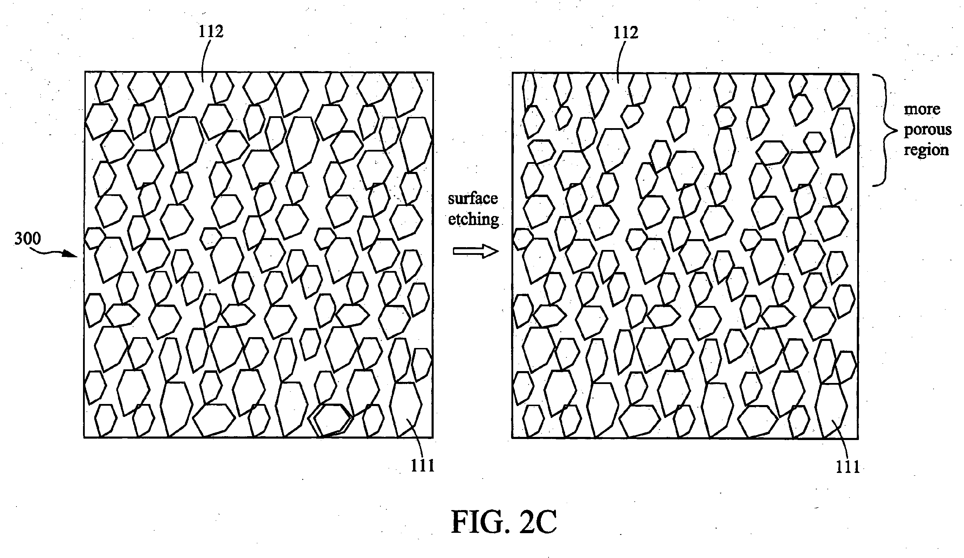

FIG. 2B is a schematic diagram showing transition from the Ni plate 300 after the Step 204 to the porous metal substrate 100 after the Step 209 and a reduction process. The surface of Ni substrate 300 after the Step 204 can be further etched to be more porous than the inside of Ni substrate 300, as shown in FIG. 2C. The porous region has a depth less than 150µm and a porosity which is 1.4 to 18 times of the inside of porous Ni plate 300. After the surface etching, the steps after Step 205 are continued. By having the more porous region as shown in FIG. 2C, the stress due to the thermal expansion mismatch between the porous metal substrate 300 and any functional layer coated on the porous metal substrate 300 can be further reduced.

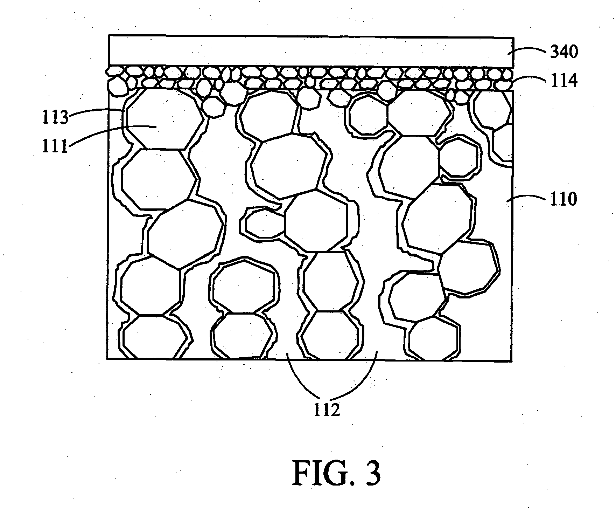

An anode functional layer 340 may be further coated on the porous metal substrate 100 to form a combination of the support and the anode functional layer of solid oxide fuel cells. In one exemplary embodiment, a redox stable anode functional layer 340 of LSCM, or Sr_{0.86}Y_{0.08}TiO₃, or La_{0.33}Sr_{0.66}TiO₃ as shown in FIG. 3 is coated on the porous metal substrate 100 by a high-voltage high-enthalpy Ar-He-H₂ atmospheric-pressure plasma spraying process. Here, the anode functional layer 340 provides a resistance for oxygen passing through it and enhances the leakage oxygen to be absorbed by the porous shells (containing iron and nickel particles) of metal particles constructing the porous metal supporting substrate 100 for solid oxide fuel cells. The second metal particles of the porous metal film 114 can also have a shell containing iron and nickel particles by the same impregnating, oxidation and reduction processes mentioned above.

## Claims

1. A porous metal substrate structure with high gas permeability and redox stability for a solid oxide fuel cell (SOFC) comprising:
a porous metal plate composed of first metal particles, the first metal particles having a Fe content; and
a porous metal film composed of second metal particles and formed on the porous metal plate;
wherein the porous metal plate has a thickness more than the porous metal film; and the first metal particle has a size more than the second metal particle,
**characterized in that**
the first metal particles have first porous shells on the first metal particle surfaces, wherein a Fe content of each porous shell is richer than the Fe content ranging from 6 wt% to 15 wt% inside each of the first metal particles and these Fe-rich porous shells being capable of absorbing leakage oxygen.

2. The porous metal substrate structure of claim 1, wherein the first metal particle is mainly formed of a first Ni-Fe mixture, the second metal particle is mainly formed of Ni or a second Ni-Fe mixture and/or the first porous shells are formed of a third Ni-Fe mixture.

3. The porous metal substrate structure of claim 1, further comprising
a second porous shell formed of a fourth Ni-Fe mixture on the surface of each second metal particle.

4. The porous metal substrate structure of claim 1, wherein the porous metal plate has a thickness ranging from 1 mm to 1.5 mm and has a permeability of from 1.974 x 10⁻¹² m² to 4.935 x 10⁻¹² m².

5. The porous metal substrate structure of claim 1, wherein the first metal particle have a size of from 60 µm to 250 µm.

6. The porous metal substrate structure of claim 1, wherein the porous metal film has a thickness of less than 100 µm and has surface pores of less than 35µm after oxidation.

7. The porous metal substrate structure of claim 1, wherein second metal particle has a size of from 20 µm to 60 µm.

8. The porous metal substrate structure of claim 1, further comprising
a redox stable anode functional layer coated on the porous metal substrate structure by a high-voltage high-enthalpy Ar-He-H₂ atmospheric-pressure plasma spraying process.

9. The porous metal substrate structure of claim 1, wherein the redox stable anode functional layer is formed of a material selected from the group consisting of LSCM, Sr_{0.86}Y_{0.08}TiO₃, and La_{0.33}Sr_{0.66}TiO₃.

10. A method for fabricating a porous metal substrate structure to support functional layers of a SOFC comprising:
providing first metal particles or a first metal slurry formed of the first metal particles, second metal particles or a second metal slurry formed of the second metal particles, and a solution containing Fe, wherein the first metal particle has a size more than the second metal particle;
forming a porous metal plate with the first metal particles or the first metal slurry by a sintering process;
impregnating the solution containing Fe into the porous metal plate by a vacuum means, and then sintering the impregnated porous metal plate at a temperature higher than 1100°C in a reducing or vacuum atmosphere, until the content of Fe in the porous metal plate reaches from 6 wt% to 15 wt%;
sanding and acid eroding surface of the porous metal plate;
coating the second metal particles on the porous metal plate by a powder covering means or pasting the second metal slurry on the porous metal plate, and then sintering the second metal particles or the dried second metal slurry onto the porous metal plate at a temperature higher than 1100°C to form a porous metal film on the porous metal plate;
forming a porous metal substrate with the Fe impregnated porous metal plate and the porous metal film, and acid eroding the porous metal substrate so as to increase its gas permeability to be larger than 2.96 x 10⁻¹² m²; and
oxidizing the porous metal substrate so as to shrink its pore sizes,
**characterized by** the step of
forming a porous shell containing Fe particles on each first metal particle of the porous metal substrate by the oxidation and hydrogen reduction, wherein a Fe content of each porous shell is richer than the Fe content inside the first metal particles.

11. The method of claim 10, wherein the oxidation and hydrogen reduction is at a temperature less than 1000°C.

12. The method of claim 10, wherein the first metal particle comprises Ni and has a size of from 60 µm to 250 µm.

13. The method of claim 10, wherein the second metal particle comprises Ni or a Ni-Fe mixture with a Fe content of from 6 wt% to 50 wt%, and has a size of from 20 µm to 60 µm.

14. The method of claim 10, wherein the first and second metal slurries are formed by respectively mixing the first and second metal particles with organic binder and solvent, wherein the organic binder and the solvent are polyvinyl alcohol and water or polyethyl cellulose and α-terpineol, respectively.

15. The method of claim 13, the second metal particle further comprising a material selected from the group consisting of Co, Pd and Ru.

16. The method of claim 10, wherein the sintering process to form the porous metal plate comprises:
placing the first metal particles or the first metal slurry into a mold, and then pressing the first metal particles or the first metal slurry until an un-sintered green metal plate is formed;
sintering the un-sintered green metal plate at a temperatures higher than 1100 °C to form the porous metal plate; and
acid eroding the porous metal plate.

17. The method of claim 16, wherein the sintering process for forming the porous metal plate is selected from the group consisting of a vacuum sintering process, a vacuum hot-press sintering process, and a reducing atmosphere sintering process.

18. The method of claim 10, wherein the sintering process for forming the porous metal film is selected from the group consisting of a vacuum sintering process and a reducing atmosphere sintering process.

19. The method of claim 10, further comprising:
acid etching the porous metal plate, so that the porous metal plate has a surface region that is more porous than the inside of the porous metal plate, wherein the porous region has a depth less than 150µm and a porosity which is 1.4 to 1.8 times of the inside of porous metal plate.

## Patentansprüche

1. Poröse Metallsubstratstruktur mit einer hohen Gaspermeabilität und Redoxstabilität für Festoxidbrennstoffzellen (solid oxide fuel cells, SOFC) umfassend:
eine poröse Metallplatte gebildet aus ersten Metallpartikeln, wobei die ersten Metallpartikel Fe enthalten, und
einen porösen Metallfilm gebildet aus zweiten Metallpartikeln, welcher auf der porösen Metallplatte ausgebildet ist,
wobei die poröse Metallplatte eine größere Dicke als der poröse Metallfilm aufweist und die Größe der ersten Metallpartikel größer ist als die der zweiten Metallpartikel,
**dadurch gekennzeichnet, dass**
die ersten Metallpartikel erste poröse Hüllen an den Oberflächen der ersten Metallpartikel aufweisen, wobei der Fe-Gehalt für die porösen Hüllen jeweils höher ist als der Fe-Gehalt im Inneren der ersten Metallpartikel, welcher zwischen 6 Gew.-% und 15 Gew.-% liegt, wobei die besagten Fe-reichen porösen Hüllen Lecksauerstoff absorbieren können.

2. Poröse Metallsubstratstruktur nach Anspruch 1, wobei die ersten Metallpartikel hauptsächlich durch eine erste Ni-Fe-Mischung gebildet sind, die zweiten Metallpartikel hauptsächlich durch Ni oder eine zweite Ni-Fe-Mischung gebildet sind und/oder die ersten porösen Hüllen durch eine dritte Ni-Fe-Mischung gebildet sind.

3. Poröse Metallsubstratstruktur nach Anspruch 1 außerdem umfassend:
eine zweite poröse Hülle, die aus einer vierten Ni-Fe-Mischung an der Oberfläche der zweiten Metallpartikel gebildet ist.

4. Poröse Metallsubstratstruktur nach Anspruch 1, wobei die poröse Metallplatte eine Dicke zwischen 1 mm und 1,5 mm und eine Permeabilität zwischen 1.974 x 10⁻¹² m² und 4.935 x 10⁻¹² m² aufweist.

5. Poröse Metallsubstratstruktur nach Anspruch 1, wobei die ersten Metallpartikel eine Größe zwischen 60 µm und 250 µm aufweisen.

6. Poröse Metallsubstratstruktur nach Anspruch 1, wobei der poröse Metallfilm eine Dicke geringer als 100 µm aufweist und nach der Oxidation Oberflächenporen mit weniger als 35 µm umfasst.

7. Poröse Metallsubstratstruktur nach Anspruch 1, wobei die zweiten Metallpartikel eine Größe zwischen 20 µm und 60 µm aufweisen.

8. Poröse Metallsubstratstruktur nach Anspruch 1 außerdem umfassend
eine redoxstabile Anodenfunktionsschicht, die durch ein Hochspannungs-Hochenthalpie Ar-He-H₂ Plasmaspritzverfahren unter atmosphärischem Druck auf die poröse Metallsubstratstruktur aufgebracht ist.

9. Poröse Metallsubstratstruktur nach Anspruch 1, wobei die redoxstabile Anodenfunktionsschicht aus einer Gruppe ausgewählt ist, die aus LSCM, Sr_{0.86}Y_{0.08}TiO₃ und La_{0.33}Sr_{0.66}TiO₃ besteht.

10. Verfahren zur Herstellung einer porösen Metallsubstratstruktur als Träger für Funktionsschichten einer Festoxidbrennstoffzelle umfassend:
Bereitstellung von ersten Metallpartikeln oder eines ersten Metallschlickers, der aus den ersten Metallpartikeln hergestellt ist, von zweiten Metallpartikeln oder eines zweiten Metallschlickers, der aus den zweiten Metallpartikeln hergestellt ist, und von einer Fe-haltigen Lösung, wobei die ersten Metallpartikel größer sind als die zweiten Metallpartikel,
Ausbilden einer porösen Metallplatte aus den ersten Metallpartikeln oder dem ersten Metallschlicker über einen Sinterprozess,
Imprägnieren der porösen Metallplatte mit der Fe-haltigen Lösung durch ein Vakuumverfahren, und die anschließende Sinterung der imprägnierten porösen Metallplatte bei einer Temperatur oberhalb 1100°C in einer reduzierenden oder Vakuumatmosphäre, sodass der Fe-Gehalt in der porösen Metallplatte zwischen 6 Gew.-% und 15 Gew.-% liegt,
Sandstrahlen und Säureerodieren der Oberfläche der porösen Metallplatte;
Aufbringen der zweiten Metallpartikel auf die poröse Metallplatte durch ein Pulverbeschichtungsverfahren oder durch das Aufrakeln des zweiten Metallschlickers auf die poröse Metallplatte, und daran anschließend das Aufsintern der zweiten Metallpartikel oder des getrockneten zweiten Metallschlickers auf die poröse Metallplatte bei einer Temperatur oberhalb 1100°C, wobei ein poröser Metallfilm auf der porösen Metallplatte ausgebildet wird,
Ausbilden eines porösen Metallsubstrates mit der Fe-imprägnierten porösen Metallplatte und dem porösen Metallfilm und Säureerodieren des porösen Metallsubstrates, um seine Gaspermeabilität auf über 2.96 x 10⁻¹² m² zu erhöhen, und
Oxidieren des porösen Metallsubstrates, um die Porengrößen zu verringern,
**dadurch gekennzeichnet, dass**
der Schritt zur Ausbildung einer porösen Hülle, die Fe-Partikel enthält, an jedem ersten Metallpartikel des porösen Metallsubstrats durch eine Oxidation und eine Wasserstoffreduktion erfolgt, wobei der Fe-Gehalt der porösen Hüllen jeweils höher ist als der Fe-Gehalt im Inneren der ersten Metallpartikel.

11. Verfahren nach Anspruch 10, wobei die Oxidation und die Wasserstoffreduktion bei Temperaturen unterhalb 1000°C ablaufen.

12. Verfahren nach Anspruch 10, wobei die ersten Metallpartikel Ni enthalten und eine Größe zwischen 60 µm und 250 µm aufweisen.

13. Verfahren nach Anspruch 10, wobei die zweiten Metallpartikel Ni oder eine Ni-Fe-Mischung mit einem Fe-Gehalt zwischen 6 Gew.-% und 50 Gew.-% enthalten und eine Größe zwischen 20 µm und 60 µm aufweisen.

14. Verfahren nach Anspruch 10, wobei der erste und zweite Metallschlicker jeweils gebildet werden, indem die ersten oder zweiten Metallpartikel jeweils mit einem organischen Binder und Lösungsmittel vermischt werden, wobei der organische Binder und das Lösungsmittel Polyvinylalkohol und Wasser beziehungsweise Polyethylcellulose und α-Terpineol sind.

15. Verfahren nach Anspruch 13, wobei die zweiten Metallpartikel außerdem ein Material umfassen, das aus einer Gruppe ausgewählt ist, die aus Co, Pd und Ru besteht.

16. Verfahren nach Anspruch 10, wobei der Sinterprozess zur Ausbildung der porösen Metallplatte umfasst:
Einfüllen der ersten Metallpartikel oder des ersten Metallschlickers in eine Form, und das anschließende Pressen der ersten Metallpartikel oder des ersten Metallschlickers bis eine ungesinterte Metallplatte im Grünzustand ausgebildet ist,
Sintern der ungesinterten Metallplatte im Grünzustand bei Temperaturen oberhalb 1100°C, um eine poröse Metallplatte auszubilden, und
Säureerodieren der porösen Metallplatte.

17. Verfahren nach Anspruch 16, wobei der Sinterprozess zur Ausbildung der porösen Metallplatte aus einer Gruppe ausgewählt ist, die aus einem Vakuumsinterverfahren, einem Vakuumheißpresssinterverfahren und einem Sinterverfahren in reduzierender Atmosphäre besteht.

18. Verfahren nach Anspruch 10, wobei der Sinterprozess zur Ausbildung des porösen Metallfilms aus einer Gruppe ausgewählt ist, die aus einem Vakuumsinterverfahren und einem Sinterverfahren in reduzierender Atmosphäre besteht.

19. Verfahren nach Anspruch 10 außerdem umfassend:
eine Säurebehandlung der porösen Metallplatte, wodurch die poröse Metallplatte eine Oberflächenregion aufweist, die poröser ist als das Innere der porösen Metallplatte, wobei die poröse Region weniger tief reicht als 150 µm, wobei ihre Porosität das 1,4- bis 1,8-fache der Porosität im Inneren der porösen Metallplatte beträgt.

## Revendications

1. Structure de substrat en métal poreux avec une perméabilité au gaz et une stabilité redox élevée pour une pile à combustible à oxyde solide (SOFC) comprenant :
une plaque en métal poreux composée de premières particules de métal, les premières particules de métal ayant une teneur en fer et
une pellicule en métal poreux composée de secondes particules de métal et formée sur la plaque en métal poreux,
la plaque en métal poreux ayant une épaisseur supérieure à la pellicule en métal poreux et la première particule de métal ayant une taille supérieure à la seconde particule de métal,
**caractérisée en ce que** les premières particules de métal ont des premières enveloppes poreuses sur les premières surfaces de particules de métal, une teneur en fer de chaque enveloppe poreuse étant plus riche que la teneur en fer de l'ordre de 6% en poids à 15% en poids à l'intérieur des premières particules de métal et ces enveloppes poreuses riches en fer étant capables d'absorber une fuite d'oxygène.

2. Structure de substrat en métal poreux selon la revendication 1, la première particule de métal étant principalement formée par un premier mélange de nickel et de fer, la seconde particule de métal étant principalement formée par du nickel ou un second mélange de nickel et de fer et/ou les premières enveloppes poreuses sont formées par un troisième mélange de nickel et de fer.

3. Structure de substrat en métal poreux selon la revendication 1 comprenant de plus une seconde enveloppe poreuse formée par un quatrième mélange de nickel et de fer sur la surface de chaque deuxième particule de métal.

4. Structure de substrat en métal poreux selon la revendication 1, la plaque en métal poreux ayant une épaisseur de l'ordre d'1 mm à 1,5 mm et une perméabilité de 1,974 x 10⁻¹² m² à 4,935 x 10⁻¹² m².

5. Structure de substrat en métal poreux selon la revendication 1, la première particule de métal ayant une taille de 60 µm à 250 µm.

6. Structure de substrat en métal poreux selon la revendication 1, la pellicule en métal poreux ayant une épaisseur inférieure à 100 µm et ayant des pores de surface inférieurs à 35 µm après oxydation.

7. Structure de substrat en métal poreux selon la revendication 1, la seconde particule de métal ayant une taille de 20 µm à 60 µm.

8. Structure de substrat en métal poreux selon la revendication 1 comprenant de plus une couche fonctionnelle d'anode stable par rapport à l'oxydoréduction revêtue sur la structure de substrat en métal poreux par un processus de pulvérisation de plasma à pression atmosphérique haute tension et haute enthalpie Ar-He-H₂.

9. Structure de substrat en métal poreux selon la revendication 1, la couche fonctionnelle d'anode stable par rapport à l'oxydoréduction étant formée par un matériau sélectionné dans le groupe composé de LSCM, ST_{0,86}Y_{0.08}TiO₃ et La_{0.33}Sr_{0.66}TiO₃.

10. Procédé de fabrication d'une structure de substrat en métal poreux pour supporter des couches fonctionnelles d'une SOFC comprenant :
fourniture de premières particules de métal ou d'une première boue de métal formée par des premières particules de métal, des secondes particules de métal ou d'une seconde boue de métal formée par les secondes particules de métal et une solution contenant du fer, la première particule de métal ayant une taille supérieure à la seconde particule de métal ;
formation d'une plaque en métal poreux avec les premières particules de métal ou la première boue de métal par un processus de frittage ;
imprégnation de la solution contenant du fer dans la plaque en métal poreux par un moyen sous vide et ensuite frittage de la plaque en métal poreux imprégnée à une température supérieure à 1100 °C dans une atmosphère réductrice ou sous vide jusqu'à ce que la teneur en fer dans la plaque en métal poreux soit de 6% en poids à 15% en poids. ;
sablage et érosion par acide de la surface de la plaque en métal poreux ;
revêtement des secondes particules de métal sur la plaque en métal poreux par un moyen de recouvrement par poudre ou de collage de la seconde boue de métal sur la plaque en métal poreux et ensuite frittage des secondes particules de métal ou de la seconde boue de métal séchée sur la plaque en métal poreux à une température supérieure à 1100 °C pour former une pellicule en métal poreux sur la plaque en métal poreux ;
formation d'un substrat en métal poreux avec la plaque en métal poreux imprégnée de fer et la pellicule en métal poreux et érosion par acide du substrat en métal poreux de manière à augmenter sa perméabilité au gaz pour être supérieure à 2.96 x 10⁻¹² m² et
oxydation du substrat en métal poreux pour diminuer la taille de ses pores,
**caractérisé par** l'étape de :
formation d'une enveloppe poreuse contenant des particules de fer sur chaque première particule de métal du substrat en métal poreux par l'oxydation et la réduction d'hydrogène, une teneur en fer de chaque enveloppe poreuse étant plus riche que la teneur en fer à l'intérieur des premières particules de métal.

11. Procédé selon la revendication 10, l'oxydation et la réduction d'hydrogène étant à une température inférieure à 1000°C.

12. Procédé selon la revendication 10, la première particule de métal comprenant du nickel et ayant une taille de 60 µm à 250 µm.

13. Procédé selon la revendication 10, la seconde particule de métal comprenant du nickel ou un mélange de nickel et de fer avec une teneur en fer de 6% en poids à 50% en poids et ayant une taille de 20 µm à 60 µm.

14. Procédé selon la revendication 10, la première boue de métal et la seconde boue de métal étant formées en mélangeant respectivement les premières et les secondes particules de métal avec un liant organique et un solvant, le liant organique et le solvant étant respectivement de l'alcool polyvinylique et de l'eau ou de la cellulose de polyéthyle et de l'alpha-terpinéol.

15. Procédé selon la revendication 13, la seconde particule de métal comprenant de plus un matériau sélectionné dans le groupe comportant le cuivre, le palladium et le ruthénium.

16. Procédé selon la revendication 10, le processus de frittage pour former la plaque en métal poreux comprenant :
le placement des premières particules de métal ou de la première boue de métal dans un moule et ensuite pression des premières particules de métal ou de la première boue de métal jusqu'à ce qu'une plaque de métal vert non frittée soit formée ;
le frittage de la plaque de métal vert non frittée à une température supérieure à 1100 °C pour former la plaque en métal poreux et
l'érosion à l'acide de la plaque en métal poreux.

17. Procédé selon la revendication 16, le processus de frittage pour former la plaque en métal poreux étant sélectionné dans le groupe comprenant un processus de frittage sous vide, un processus de frittage par pression à chaud sous vide et un processus de frittage en atmosphère réductrice.

18. Procédé selon la revendication 10, le processus de frittage pour former la pellicule en métal poreux étant sélectionné dans le groupe comprenant un processus de frittage sous vide et un processus de frittage en atmosphère réductrice.

19. Procédé selon la revendication 10 comprenant de plus :
le décapage à l'acide de la plaque en métal poreux si bien que la plaque en métal poreux a une région de surface qui est plus poreuse que l'intérieur de la plaque en métal poreux, la région poreuse ayant une profondeur inférieure à 150 µm et une porosité qui est 1,4 à 1,8 fois celle de l'intérieur de la plaque en métal poreux.
